# FASCICULE DE BREVET EUROPEEN

(11) **EP 1 848 607 B1**
(45) Date de publication et mention de la délivrance du brevet: **10.12.2008**
(21) Numéro de dépôt: 06709458.1
(22) Date de dépôt: 31.01.2006
(51) Int. Cl.: B60K 6/26, B60K 6/40, B60K 6/48

(54) **DISPOSITIF D'ACCOUPLEMENT ENTRE LE ROTOR D'UNE MACHINE ELECTRIQUE TOURNANTE REVERSIBLE ET L'ARBRE PRIMAIRE DE LA BOITE DE VITESSES D'UN MOTEUR THERMIQUE DE VEHICULE AUTOMOBILE**
VORRICHTUNG ZUM KOPPELN EINES ROTORS EINER SICH DREHENDEN ELEKTRISCHEN MASCHINE AN EINE PRIMÄRGETRIEBEWELLE EINES BRENNKRAFTMOTORS EINES KRAFTFAHRZEUGS
DEVICE FOR COUPLING A ROTOR OF A ROTATING ELECTRICAL MACHINE WITH THE GEARBOX PRIMARY SHAFT OF A MOTOR VEHICLE HEAT ENGINE

(30) Priorité: 01.02.2005 FR 0500992
(43) Date de publication de la demande: 31.10.2007
(73) Titulaire: PEUGEOT CITROËN AUTOMOBILES S.A., 78140 Vélizy Villacoublay (FR)
(72) Inventeur: PAUMIER, Alain, F-28130 Maintenon (FR); BOUTOU, Thomas, F-75013 Paris (FR)
(86) Numéro de dépôt international: PCT/FR2006/050074
(87) Numéro de publication internationale: WO 2006/082335

(56) Documents cités:
- FR-A- 2 828 141
- FR-A- 2 830 305
- FR-A- 2 837 246
- FR-A- 2 837 248

## Description

La présente invention concerne un dispositif d'accouplement entre le rotor d'une machine électrique tournante réversible et l'arbre primaire de la boîte de vitesses d'un moteur thermique d'un groupe motopropulseur hybride d'un véhicule automobile.

On connaît un tel dispositif par exemple de FR2837246 A montrant les caractéristiques du préambule de la revendication 1 selon lequel le rotor de la machine électrique est solidaire d'un moyeu monté concentriquement à l'arbre primaire de la boîte de vitesses et à rotation relativement à un carter fixe portant le stator de la machine électrique, le stator et le rotor étant coaxiaux et un entrefer étant défini entre la périphérie interne du stator et la périphérie externe du rotor.

L'arbre primaire est monté à rotation à son extrémité située du côté de la boîte de vitesses par un palier à roulement baignant dans l'huile de boîte de vitesses et son extrémité opposée est également montée à rotation dans un trou borgne réalisé en bout de l'arbre vilebrequin du moteur thermique.

L'arbre primaire est en outre accouplé à l'arbre vilebrequin par l'intermédiaire d'un embrayage pouvant être débrayé par une commande à butée de débrayage de manière à passer d'une position embrayée de l'embrayage dans laquelle la rotation de l'arbre vilebrequin est transmise à l'arbre primaire, à une position débrayée de cet embrayage, lors du passage d'un rapport de vitesse ou en mode électrique de fonctionnement du moteur, et à laquelle l'arbre vilebrequin est désaccouplé de l'arbre primaire.

Le moyeu du rotor de la machine électrique comprend un manchon monté sur l'arbre primaire et accouplé en rotation à ce dernier par une liaison à cannelures.

La transmission de couple de la machine électrique à l'arbre primaire de la boîte de vitesses par l'intermédiaire d'une liaison cannelée sans lubrification impose un jeu entre manchon du moyeu du rotor et l'arbre primaire afin d'assurer le montage du manchon sur cet arbre par les cannelures. Une telle liaison entraîne, lors de la rotation sous couple de l'arbre primaire dans un environnement à sec, c'est-à-dire sans huile, des microdéplacements entre le manchon du moyeu de rotor et l'arbre primaire; pouvant provoquer des usures importantes par frottement dites "fretting corrosion" des cannelures de liaison entre ces deux pièces, engendrant à terme du matage des cannelures et la perte de la liaison cannelée.

La présente invention a pour but d'éliminer l'inconvénient ci-dessus en proposant un dispositif d'accouplement entre le rotor d'une machine électrique tournante réversible et l'arbre primaire de la boîte de vitesses d'un moteur thermique d'un groupe motopropulseur hybride d'un véhicule automobile, le rotor étant solidaire d'un moyeu monté concentriquement à l'arbre primaire et à rotation relativement à un carter fixe portant un stator de la machine électrique définissant un entrefer avec le rotor, et l'arbre primaire pouvant être désaccouplé en rotation de l'arbre vilebrequin du moteur par l'intermédiaire d'un embrayage débrayable par une commande à butée de débrayage, et qui est caractérisé en ce que le moyeu du rotor est accouplé à l'arbre primaire par une pièce d'accouplement comprenant une couronne dentée extérieurement en engrènement à l'intérieur du moyeu du rotor et un manchon central monté directement sur l'abre primaire en étant accouplé à ce dernier par une liaison à cannelures et en ce que la couronne dentée et le manchon central de la pièce d'accouplement ont leurs deux extrémités cylindriques, qui sont opposées aux liaisons d'accouplement au moyeu du rotor et à l'arbre primaire, centrées respectivement dans le moyeu du rotor et sur l'arbre primaire suivant un ajustement lisse ou glissant.

Les deux extrémités de la couronne dentée et du manchon central de la pièce d'accouplement centrées dans le moyeu du rotor et sur l'arbre primaire sont situées d'un même côté parallèlement à l'arbre primaire.

La pièce d'accouplement est immobilisée en translation relativement au moyeu du rotor et à l'arbre primaire d'une part par un épaulement réalisé dans la couronne dentée entre l'extrémité lisse de la couronne dentée et les extrémités adjacentes des dents du moyeu du rotor de manière que les extrémités de ces dents soient en butée sur l'épaulement de la couronne dentée et d'autre part par un épaulement de l'arbre primaire adjacent à ses cannelures de liaison avec le manchon central et sur lequel sont en butée les cannelures internes du manchon central.

La commande à butée de débrayage permet d'agir sur des extrémités d'au moins deux tiges cylindriques de poussée montées à coulissement guidé parallèlement à l'arbre primaire au travers d'une paroi transversale à cet arbre reliant la couronne dentée au manchon central de la pièce d'accouplement, de manière à déplacer élastiquement un diaphragme d'embrayage, par l'intermédiaire d'une butée annulaire solidaire des extrémités des tiges de poussée opposées à leurs extrémités actionnées par la commande de butée de débrayage, pour amener ce diaphragme à sa position de débrayage de l'embrayage.

Les extrémités des tiges de poussée opposées à la butée de déplacement du diaphragme sont solidaires d'une plaque sensiblement circulaire perpendiculaire à l'arbre primaire et ayant un perçage central entourant coaxialement cet arbre, la butée de la commande de débrayage étant appui sur la plaque circulaire.

La commande à butée de débrayage agit sur trois tiges de poussée traversant respectivement trois perçages de la paroi transversale de la pièce d'accouplement régulièrement espacés circonférentiellement les uns des autres de 120° d'angle.

La plaque circulaire est fixée aux extrémités des tiges de poussée par des vis de fixation et la butée de déplacement du diaphragme est fixée aux extrémités opposées des tiges de poussée également par des vis de fixation.

La commande à butée de débrayage est du type hydraulique.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels:

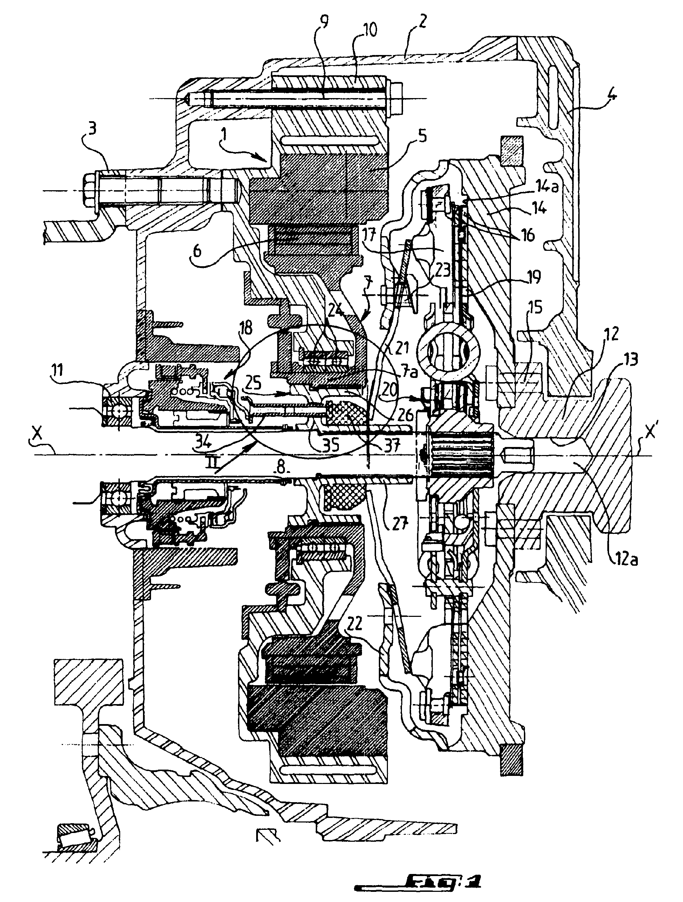

- la figure 1 est une vue en coupe longitudinale représentant une machine électrique tournante réversible, conforme à l'invention, et faisant partie d'un groupe motopropulseur hydride d'un véhicule automobile;
- la figure 2 est une vue agrandie de la partie cerclée en II de la figure 1; et
- la figure 3 est une vue en perspective d'une pièce d'accouplement conforme à l'invention.

En se reportant aux figures, la référence 1 désigne une machine électrique tournante réversible logée dans un carter d'embrayage 2 qui est fixé entre le carter 3 de la boîte de vitesses et le carter 4 du moteur thermique d'un véhicule automobile.

La machine électrique 1, qui fait partie d'un groupe motopropulseur hybride, comprend essentiellement un stator annulaire fixe 5 et un rotor annulaire 6 logé coaxialement dans le stator fixe 5 suivant un axe de symétrie axiale X-X' autour duquel le rotor 6 est monté rotatif.

Un entrefer est défini entre la périphérie interne du stator 5 et la périphérie externe du rotor 6.

Le rotor 6 est monté solidaire sur un moyeu de support 7 disposé concentriquement autour d'un arbre primaire ou arbre d'entrée 8 de la boîte de vitesses s'étendant suivant l'axe X-X' et est monté à rotation à cet arbre comme on le verra ultérieurement.

Le stator 5 est fixé au carter d'embrayage 2 par des vis de fixation 9, dont une seule est représentée, traversant une carcasse ou carter dans lequel est fixée par emmanchement la périphérie externe du stator 5.

L'arbre primaire 8 est monté à rotation à son extrémité côté boîte de vitesses par un palier à roulement 11 et monté non centré dans un trou borgne 12a réalisé en bout ou partie formant nez de l'arbre vilebrequin 12 du moteur thermique par un palier lisse 13.

Un volant d'inertie 14 est fixé à l'arbre vilebrequin 12 par des vis de fixation 15 et comporte une face dressée 14a perpendiculaire à l'arbre vilebrequin 12 sur laquelle peut venir en engagement par friction au moins un disque d'embrayage de friction 16 à déplacement axial commandé par un plateau 17. Ce dernier est commandé par une butée de débrayage 18 et le disque d'embrayage 16 est relié par un accouplement flexible 19 à un moyeu 20 solidaire en rotation de l'arbre primaire 8, par exemple par des cannelures.

Le plateau d'embrayage 17 est commandé par un diaphragme 21 monté concentriquement à l'arbre primaire 8 et piloté par la butée 18 pour amener l'embrayage constitué par le disque 16 et le plateau 17 en position embrayée ou débrayée du volant d'inertie 14 et, par conséquent, accoupler l'arbre primaire 8 à l'arbre vilebrequin 12 ou le désaccoupler de ce dernier lors du passage d'un rapport de vitesse ou en mode de fonctionnement électrique du moteur. Le diaphragme 21, en forme de membrane élastiquement déformable, est disposé entre le plateau 17 et un couvercle d'embrayage 22, le diaphragme 21 étant fixé au couvercle 22 par des rivets 23 régulièrement répartis sur une même circonférence au voisinage du bord externe du diaphragme 21.

Selon l'invention, le moyeu 7 du rotor 6 a son manchon central 7a qui est d'une part monté à rotation à sa périphérie externe relativement au carter 10 du stator 5 par des paliers à roulements à billes 24 et d'autre part accouplé en rotation à l'arbre primaire 8 par l'intermédiaire d'une pièce d'accouplement 25.

La pièce d'accouplement 25 comprend une couronne dentée extérieurement 26 en engrènement dans le manchon central 7a du moyeu 7 du rotor 6 et un manchon central 27, coaxial à la couronne dentée 26, monté directement sur l'arbre primaire 8 en étant accouplé en rotation à ce dernier par une liaison à cannelures 28.

La couronne dentée 26 est prolongée à sa partie opposée à ses dents périphériques par une extrémité cylindrique 29 concentrique à l'arbre primaire 8 et dont la périphérie externe est lisse de manière à être montée en ajustement glissant dans la portion d'alésage interne lisse du manchon 7a du moyeu 7 opposée à périphérie interne de ce manchon comportant les dents internes engrenant avec celles de la couronne dentée 26.

De même, le manchon 27 de la pièce d'accouplement 25 a son extrémité opposée à la liaison à cannelures 28 en forme de cylindre 30 dont la périphérie interne lisse est montée en ajustement glissant sur une portion correspondante de périphérie lisse externe de l'arbre primaire 8 opposée à ses cannelures radialement externes.

De préférence, l'ajustement entre d'une part la portion d'alésage du manchon 7a et l'extrémité cylindrique 29 de la couronne dentée 26 et d'autre part l'alésage défini par l'extrémité cylindrique 30 et la portion lisse correspondante de l'arbre primaire 8 est du type H7-g6.

Les deux extrémités 29, 30 de la couronne dentée 26 et du manchon central 27 de la pièce d'accouplement 25 sont situées d'un même côté parallèlement à l'arbre primaire 8.

La pièce d'accouplement 25 est immobilisée en translation relativement au manchon 7a du moyeu 7 du rotor 6 et à l'arbre primaire 8 d'une part par un épaulement 31 réalisé dans la couronne dentée 26 entre l'extrémité cylindrique 29 de la couronne 26 et les extrémités ajacentes des dents internes du manchon 7a du moyeu 7 de manière qu'en position montée de la pièce d'accouplement 25 dans le manchon 7a, les extrémités de ces dents viennent en appui sur l'épaulement 31 et d'autre part par un épaulement 32 de l'arbre primaire 8 adjacent à ses cannelures de liaison avec le manchon central 27 et sur lequel épaulement 32 sont en appui les cannelures internes 33 du manchon central 27.

Le montage s'opère comme suit :
- l'abre primaire 8 est monté dans la boîte de vitesses,
- le manchon 25 est introduit sur l'arbre primaire 8 jusqu'à l'appui sur l'épaulement 32,
- puis le moyeu 7 de la machine électrique est introduit sur le manchon 25 jusqu'à l'appui sur l'épaulement 31.

En prévoyant un ajustement glissant entre d'une part l'extrémité cylindrique 29 de la couronne 26 et le manchon 7a du moyeu 7 du rotor 6 et d'autre part l'extrémité cylindrique 30 et l'arbre primaire 8, on réalise une fonction de centrage de ces pièces séparée de la fonction de transmission de couple entre celles-ci, de sorte que les microdéplacements radiaux entre d'une part la couronne dentée 26 et le manchon 7a du moyeu 7 et d'autre part le manchon central 27 et l'arbre primaire 8, sont supprimés, ce qui par conséquent élimine les problèmes d'usure des dentures et des cannelures de ces pièces.

La commande à butée de débrayage 18, connue en soi, et par exemple du type hydraulique, est fixée dans le carter d'embrayage 2 côté boîte de vitesses, c'est-à-dire à l'opposé de l'embrayage, et est adaptée pour agir sur les extrémités d'au moins deux tiges cylindriques de poussée 34 montées à coulissement guidé parallèlement à l'arbre primaire 8 au travers d'une paroi 35 s'étendant transversalement à l'arbre primaire 8 et reliant la couronne dentée 26 au manchon central 27 de la pièce d'accouplement 25 qui est ainsi réalisée de façon monobloc.

De préférence, trois tiges coulissantes 34 sont prévues traversant à coulissement guidé respectivement trois perçages 36 de la paroi 35 régulièrement espacés circonférentiellement les uns des autres de 120 degrés d'angle.

Les tiges de poussée 34 comportent, à leurs extrémités opposées à celles sur lesquelles agit la commande à butée de débrayage 18, une butée annulaire 37 en appui au voisinage du bord délimitant le perçage central du diaphragme 21 disposé concentriquement autour du manchon central 27 de la pièce d'accouplement 25. La butée 37 est montée concentriquement à l'arbre primaire 8 et est en contact glissant sur le manchon central 27 qui assure ainsi le guidage en translation de la butée 37 lors de ses mouvements de débrayage et d'embrayage.

La butée annulaire 37 est fixée aux extrémités correspondantes des tiges de poussée 34 par exemple par des vis de fixation 38 et une plaque circulaire 39 à perçage central 40 entourant concentriquement l'arbre primaire 8 est fixée aux extrémités opposées des tiges de poussée 34 par des vis de fixation 41. La plaque circulaire 39 s'étend perpendiculairement à l'axe longitudinal de l'arbre primaire 8.

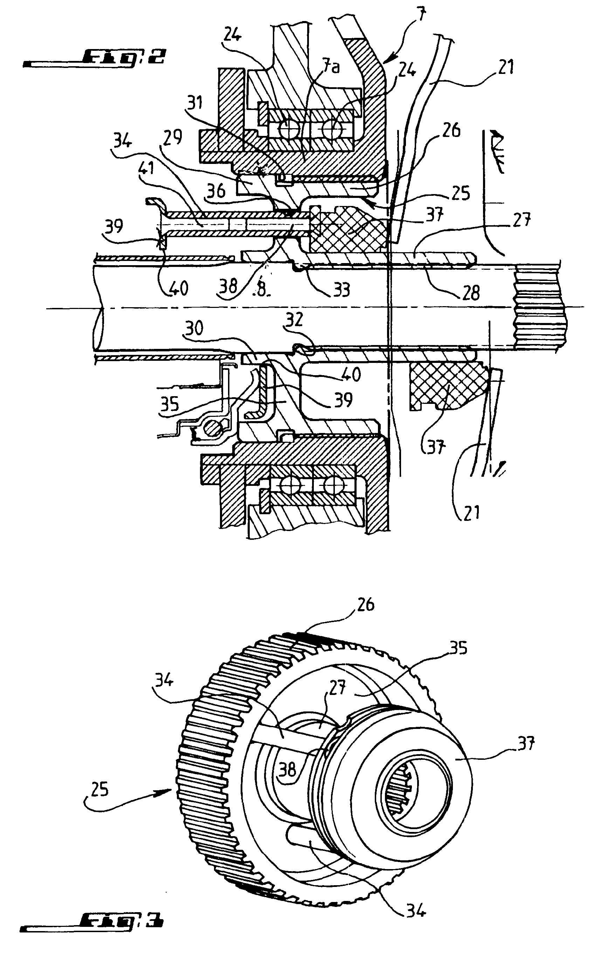

La demi-vue supérieure de la figure 2 montre que les tiges de poussée 34 et la butée annulaire 37 occupent une position embrayée du mécanisme d'embrayage tandis que la demi-vue inférieure de cette figure montre que la commande à butée de débrayage 18 a été pilotée de manière à déplacer en translation les tiges de poussée 34 et la butée annulaire 37 à une position débrayée du mécanisme d'embrayage.

Ainsi, la pièce d'accouplement 25 permet d'une part d'assurer la transmission de couple de la machine électrique 1 à l'arbre primaire 8 par des liaisons dentées et cannelées et d'autre part de guider les tiges de poussoir assurant la fonction d'embrayage et de débrayage du mécanisme d'embrayage par les deux butées situées aux extrémités de ces tiges.

## Revendications

1. Dispositif d'accouplement entre le rotor (6) d'une machine électrique tournante réversible (1) et l'arbre primaire (8) de la boîte de vitesses d'un moteur thermique d'un groupe motopropulseur hybride d'un véhicule automobile, le rotor (6) étant solidaire d'un moyeu (7) monté concentriquement à l'arbre primaire (8) et à rotation relativement à un carter fixe (10) portant un stator (5) de la machine électrique (1) définissant un entrefer avec le rotor (6), et l'arbre primaire (8) pouvant être désaccouplé en rotation de l'arbre vilebrequin (12) du moteur par l'intermédiaire d'un embrayage débrayable par une commande à butée de débrayage (18), **caractérisé en ce que** le moyeu (7) du rotor (6) est accouplé à l'arbre primaire (8) par une pièce d'accouplement (25) comprenant une couronne dentée extérieurement (26) en engrènement à l'intérieur du moyeu (7) du rotor (6) et un manchon central (27) monté directement sur l'arbre primaire (8) en étant accouplé à ce dernier par une liaison à cannelures (28) et **en ce que** la couronne dentée (26) et le manchon central (27) de la pièce d'accouplement (25) ont leurs deux extrémités cylindriques (29,30), qui sont opposées aux liaisons d'accouplement au moyeu (7) du rotor (6) et à l'arbre primaire (8), centrées respectivement dans le moyeu (7) du rotor (6) et sur l'arbre primaire (8) suivant un ajustement lisse ou glissant.

2. Dispositif selon la revendication 1, **caractérisé en ce que** les deux extrémités (29,30) de la couronne dentée (26) et du manchon central (27) de la pièce d'accouplement (25) centrées dans le moyeu (7) du rotor (6) et sur l'arbre primaire (8) sont situées d'un même côté parallèlement à l'arbre primaire (8).

3. Dispositif selon la revendication 1 ou 2, **caractérisé en ce que** la pièce d'accouplement (25) est immobilisée en translation relativement au moyeu (7) du rotor (6) et à l'arbre primaire (8) d'une part par un épaulement (31) réalisé dans la couronne dentée (26) entre l'extrémité lisse (29) de la couronne dentée (26) et les extrémités adjacentes des dents du moyeu (7) du rotor (6) de manière que les extrémités de ces dents soient en butée sur l'épaulement (31) de la couronne (26) et d'autre part par un épaulement (32) de l'arbre primaire (8) adjacent à ses cannelures de liaison avec le manchon central (27) et sur lequel sont en butée les cannelures internes (33) du manchon central (27).

4. Dispositif selon l'une des revendications précédentes, **caractérisé en ce que** la commande à butée de débrayage (18) permet d'agir sur des extrémités d'au moins deux tiges cylindriques de poussée (34) montées à coulissement guidé parallèlement à l'arbre primaire (8) au travers d'une paroi (35) transversale à cet arbre reliant la couronne dentée (26) au manchon central (27) de la pièce d'accouplement (25), de manière à déplacer élastiquement un diaphragme d'embrayage (21), par l'intermédiaire d'une butée annulaire (37) solidaire des extrémités des tiges de poussée (34) opposées à leurs extrémités actionnées par la commande à butée de débrayage (18), pour amener ce diaphragme (21) à sa position de débrayage de l'embrayage.

5. Dispositif selon la revendication 4, **caractérisé en ce que** les extrémités des tiges de poussée (34) opposées à la butée (37) de déplacement du diaphragme (21) sont solidaires d'une plaque sensiblement circulaire (39) perpendiculaire à l'arbre primaire (8) et ayant un perçage central (40) entourant coaxialement cet arbre, la butée de la commande de débrayage (18) étant en appui sur la plaque circulaire (39).

6. Dispositif selon la revendication 4 ou 5, **caractérisé en ce que** la commande à butée de débrayage (18) agit sur trois tiges de poussée (34) traversant respectivement trois perçages (36) de la paroi transversale (35) de la pièce d'accouplement (25) et régulièrement espacés circonférentiellement les uns des autres de 120° d'angle.

7. Dispositif selon la revendication 5 ou 6, **caractérisé en ce que** la plaque circulaire (39) est fixée aux extrémités des tiges de poussée (34) par des vis de fixation (41) et la butée (37) de déplacement du diaphragme (21) est fixée aux extrémités opposées des tiges de poussée (34) par des vis de fixation (38).

8. Dispositif selon l'une des revendications précédentes, **caractérisé en ce que** la commande à butée de débrayage (18) est du type hydraulique.

## Claims

1. Device for coupling the rotor (6) of a reversible rotating electric machine (1) and the primary shaft (8) of the gearbox of a combustion engine of a hybrid power unit of a motor vehicle, the rotor (6) being secured to a hub (7) mounted concentrically to the primary shaft (8) and rotationally relative to a fixed housing (10) bearing a stator (5) of the electric machine (1), defining a gap with the rotor (6), and the primary shaft (8) being able to be rotationally uncoupled from the crankshaft (12) of the engine via a clutch which can be disengaged by a clutch release bearing control (18), **characterized in that** the hub (7) of the rotor (6) is coupled to the primary shaft (8) by a coupling part (25) comprising an externally toothed ring gear (26) meshing inside the hub (7) of the rotor (6), and a central sleeve (27) mounted directly on the primary shaft (8) while being coupled thereto by a splined connection (28), and **in that** the toothed ring gear (26) and the central sleeve (27) of the coupling part (25) have their two cylindrical ends (29, 30), which are opposed to the connections for coupling to the hub (7) of the rotor (6) and to the primary shaft (8), centred in the hub (7) of the rotor (6) and on the primary shaft (8), respectively, with a smooth or sliding fit.

2. Device according to Claim 1, **characterized in that** the two ends (29, 30) of the toothed ring gear (26) and of the central sleeve (27) of the coupling part (25) which are centred in the hub (7) of the rotor (6) and on the primary shaft (8) are situated on the same side parallel to the primary shaft (8).

3. Device according to Claim 1 or 2, **characterized in that** the coupling part (25) is immobilized translationally relative to the hub (7) of the rotor (6) and to the primary shaft (8), firstly by a shoulder (31) formed in the toothed ring gear (26) between the smooth end (29) of the toothed ring gear (26) between the smooth end (29) of the toothed ring gear (26) and the adjacent ends of the teeth of the hub (7) of the rotor (6) such that the ends of these teeth butts against the shoulder (31) of the ring gear (26), and, secondly, by a shoulder (32) of the primary shaft (8) adjacent to its splines for connection with the central sleeve (7) and against which the internal spines (33) of the central sleeve (27) butt.

4. Device according to one of the preceding claims, **characterized in that** the clutch release bearing control (18) makes it possible to act on ends of at least two slidably mounted cylindrical pushrods (34) guided parallel to the primary shaft (8) through a wall (35) transverse to this shaft connecting the toothed ring gear (26) to the central sleeve (27) of the coupling part (25), so as to elastically displace a clutch diaphragm (21) via an annular thrust bearing process (7) secured to the ends of the pushrods (34) which are opposed to their ends actuated by the clutch release bearing control (18), in order to bring this diaphragm (21) to its clutch release position.

5. Device according to Claim 4, **characterized in that** the ends of the pushrods (34) which are opposed to the thrust bearing (37) for moving the diaphragm (21) are secured to a substantially circular plate (39) perpendicular to the primary shaft (8) and having a central hole (40) coaxially surrounding this shaft, the thrust bearing of the clutch release control (18) bearing against the circular plate (39).

6. Device according to Claim 4 or 5, **characterized in that** the clutch release bearing control (18) acts on three pushrods (34) passing respectively through three holes (36) in the transversable (35) of the coupling part (25), which are uniformly spaced circumferentially from one another at an angle of 120°.

7. Device according to Claim 5 or 6, **characterized in that** the circular plate (39) is fastened to the ends of the pushrods (34) by fastening screws (41), and the thrust bearing (37) for moving the diaphragm (21) is fastened to the opposed ends of the pushrods (34) by fastening screws (38).

8. Device according to one of the preceding claims, **characterized in that** the clutch release bearing control (18) is of the hydraulic type.

## Patentansprüche

1. Vorrichtung zur Kopplung eines Rotors (6) einer umsteuerbaren, umlaufenden elektrischen Maschine (1) mit der Primärwelle (8) des Getriebes einer Wärmekraftmaschine einer Hybrid-Antriebseinheit eines Kraftfahrzeugs, wobei der Rotor (6) fest mit einer Nabe (7) verbunden ist, die konzentrisch an der Primärwelle (8) und zur Rotation in Bezug auf ein fixes Gehäuse (10) angebracht ist, das einen Stator (5) der elektrischen Maschine (1) trägt, der einen Luftspalt zum Rotor (6) definiert, wobei die Primärwelle (8) in Rotation von der Kurbelwelle (12) des Motors durch eine ausrückbare Kupplung mittels einer Steuerung mit Ausrücklager (18) abgekoppelt werden kann, **dadurch gekennzeichnet, dass** die Nabe (7) des Rotors (6) mit der Primärwelle (8) durch ein Kopplungsstück (25) gekoppelt ist, das einen Außenzahnkranz (26), der im Inneren der Nabe (7) des Rotors (6) in Eingriff ist, und eine Mittelmanschette (27) aufweist, die direkt an der Primärwelle (8) angebracht ist, indem sie durch eine Keilwellenverbindung (28) mit Letzterer gekoppelt ist, und dass die beiden zylindrischen Enden (29, 30) des Zahnkranzes (26) und der Mittelmanschette (27) des Kopplungsstücks (25), die den Kopplungsverbindungen mit der Nabe (7) des Rotors (6) und der Primärwelle gegenüberliegen, in der Nabe (7) des Rotors (6) bzw. an der Primärwelle (8) einem glatten oder Gleitsitz folgend zentriert sind.

2. Vorrichtung nach Anspruch 1, **dadurch gekennzeichnet, dass** die beiden Enden (29, 30) des Zahnkranzes (26) und der Mittelmanschette (27) des Kopplungsstücks (25), die in der Nabe (7) des Rotors (6) und an der Primärwelle (8) zentriert sind, an der gleichen Seite parallel zur Primärwelle (8) angeordnet sind.

3. Vorrichtung nach Anspruch 1 oder 2, **dadurch gekennzeichnet, dass** eine Translation des Kopplungsstücks (25) in Bezug auf die Nabe (7) des Rotors (6) und die Primärwelle (8) gesperrt ist, und zwar einerseits durch eine Schulter (31), die im Zahnkranz (26) zwischen dem glatten Ende (29) des Zahnkranzes (26) und den benachbarten Enden der Zähne der Nabe (7) des Rotors (6) derart ausgebildet ist, dass diese Zähne an der Schulter (31) des Zahnkranzes (26) anstoßen, und andererseits durch eine Schulter (32) der Primärwelle (8), die zu ihren Verbindungsnuten mit der Mittelmanschette (27) benachbart ist und an der die Innennuten (33) der Mittelmanschette (27) anstoßen.

4. Vorrichtung nach einem der vorangegangenen Ansprüche, **dadurch gekennzeichnet, dass** die Steuerung mit Ausrücklager (18) ein Einwirken auf Enden von mindestens zwei zylindrischen Druckstößeln (34) ermöglicht, die in Gleitführung parallel zur Primärwelle (8) und durch eine quer zu dieser Welle stehende Wand (35), die den Zahnkranz (26) mit der Mittelmanschette (27) des Kopplungsstücks (25) verbindet, angebracht sind, um eine Kupplungsmembran (21) elastisch zu verschieben, und zwar mittels eines ringförmigen Lagers (37), das fest mit den Enden der Druckstößel (34) verbunden ist, die jenen Enden gegenüberliegen, die von der Steuerung mit Ausrücklager (18) betätigt werden, um die Membran (21) in ihre Auskupplungsstellung der Kupplung zu bewegen.

5. Vorrichtung nach Anspruch 4, **dadurch gekennzeichnet, dass** die Enden der Druckstößel (34), die dem Lager (37) zur Verschiebung der Membran (21) gegenüberliegen, mit einer im Wesentlichen kreisförmigen Platte (39) fest verbunden sind, die senkrecht zur Primärwelle (8) steht und eine Mittelbohrung (40) aufweist, die diese Welle koaxial umgibt, wobei das Lager der Kupplungsausrücksteuerung (18) an der kreisförmigen Platte (39) anstößt.

6. Vorrichtung nach Anspruch 4 oder 5, **dadurch gekennzeichnet, dass** die Steuerung mit Ausrücklager (18) auf drei Druckstößel (34) einwirkt, die durch drei entsprechende Bohrungen (36) der Querwand (35) des Kopplungsstücks (25) verlaufen und dem Umfang nach in einem Winkel von 120° regelmäßig voneinander beabstandet sind.

7. Vorrichtung nach Anspruch 5 oder 6, **dadurch gekennzeichnet, dass** die kreisförmige Platte (39) an den Enden der Druckstößel (34) durch Befestigungsschrauben (41) befestigt ist und das Lager (37) zur Verschiebung der Membran (21) an den entgegengesetzten Enden der Druckstößel (34) durch Befestigungsschrauben (38) befestigt ist.

8. Vorrichtung nach einem der vorangegangenen Ansprüche, **dadurch gekennzeichnet, dass** die Steuerung mit Ausrücklager (18) vom hydraulischen Typ ist.
